# EUROPEAN PATENT APPLICATION

(11) **EP 2 302 565 A2**
(43) Date of publication of application: **30.03.2011**
(21) Application number: 10178500.4
(22) Date of filing: 22.09.2010
(51) Int. Cl.: G06K 17/00, G06Q 90/00, G06K 9/20

(54) **Data processing device using image as data source and data input method through capturing image**

(30) Priority: 25.09.2009 CN 200910175752
(71) Applicant: Getac Technology Corporation, Nangang, Taipei City 11568 (TW)
(72) Inventor: Chiou, Hann Huei, Taipei City Taiwan 11568 (CN); Lai, Po Hao, Taipei City Taiwan 11568 (CN)
(74) Representative: Schmidt, Axel

(57) **Abstract**

A data processing device using an image as a data source includes an image capturing unit, a display unit, image recognition means, a storage unit, a processor, and an input unit. The image capturing unit obtains an original image frame to be displayed on the display unit. The image recognition modules respectively recognize different types of targets in the original image frame, so as to obtain target data of each target. The storage unit stores the original image frame, the target data, and an application program. The processor executes the application program, controls the image recognition modules, and marks the successfully recognized target in the original image frame. The input unit is adopted by a user to select the successfully recognized target in the original image frame, so that the processor transmits the target data of the recognition target to the application program.

## Description

### Technical Field

The present invention relates to image recognition, and more particularly to a data processing device and a data input method capable of directly recognizing various types of target data in an image frame and using the recognized target data as input data of an application program.

### Related Art

Image recognition technologies and applications thereof have been developed for a period of time. Some known technologies are described as follows. Taiwan (R.O.C) Invention Patent No. I312487 issued on July 21, 2009, entitled "Snapshot Characters Recognition System Of A Hand-Carried Data Processing Device And Its Method", is proposed to alleviate the limitation on a large number of character input of the hand-carried data processing device in the prior art. The snapshot characters recognition system is disposed in the hand-carried data processing device. In the system, an image capturing unit captures an image frame according to a recognition mode selected by a user, and then a central processing unit CPU converts the image frame into an image file. A recognition unit performs a recognition process on the image file. After the image file is successfully recognized as a text file, the text file is sent to a storage unit 40 and stored therein. Therefore, the character recognition function in the hand-carried data processing device is realized by capturing image. The image recognition mode includes: limited area capturing mode, single-line text capturing mode, and whole-page data capturing mode.

Moreover, Taiwan (R.O.C) Invention Patent No. 430774 issued on April 21, 2001, as so published as US 6,115,513 on September 5, 2000, entitled "Information Input Method and Apparatus", is proposed to provide a data input apparatus and a data input method, which can be implemented easily, effectively, and intuitively, so that a user does not need to learn how to use or completely understand specific hardware. Patent No. 430774 also provides a data input apparatus and a data input method, so as to enable the user to assign, associate, and make reference to information from a large amount of data through simple operations.

Currently, the image recognition technologies available in the market mainly include: optical character recognition OCR, machine readable passport, car license plate recognition, barcode reader, and optical mark recognition, such as answer sheet reader. Although these image recognition technologies are applied in respective intellectual fields, their core technologies are based on image processing and binarization. Furthermore, software run by various types of image recognition are mostly independent application programs. Generally, a set of recognition software can simply recognize a certain type of targets, for example license plates, and can rarely recognize different types of targets in an image at the same time. If the user intends to recognize various types of targets in an image at the same time, several types of image recognition software need to be run to respectively recognize the targets in the image, and then recognition results of the recognition software are collected and integrated into an application program executed by the user for data processing or process. The whole process is rather complex and inconvenient for the user.

### SUMMARY

Accordingly, the first objective of the present invention is to provide to a data processing device using an image as a data source, which is capable of conveniently obtaining target data of various types of targets in an original image frame as input data of an application program through a single operation interface, thereby simplifying input operation of the data.

In order to achieve the first objective, the data processing device using an image as a data source for the application of the present invention is provided to capturing an original image frame including at least one target, obtains target data carried by the target, and transmits the target data. The data processing device using an image as a data source for the application of the present invention includes at least the following means
(1) an image capturing unit, for obtaining the original image frame;
(2) a display unit, for displaying the original image frame and an execution content of the application program;
(3) image recognition means for respectively recognizing different types of targets in the original image frame to obtain target data carried by the target;
(4) a storage unit for storing the original image frame, the target data, and the application program;
(5) a processor, for executing the application program and enabling the image recognition means to recognize the target in the original frame, loading the recognized target data of the target into the storage unit, and marking the successfully recognized target in the original image frame;
(6) an input unit, electrically connected to the processor, for transmitting an input signal to the processor to execute the application program and to select the successfully recognized target in the original image frame, so that the processor transmits the target data of the recognized target which is selected to the application program as input data of the application program.

In the above arrangement, the processor further includes an event detection procedure for detecting a predetermined event, and the associated content of the image recognition means and the event detection means remain in a background processing manner without being displayed by the display unit. The processor marks at least one successfully recognized target in the original image frame as marked target without displaying the original image frame on the display unit, and loads the recognized target data of the target into a storage unit. After the event detection means detects that a predetermined event occurs, the processor control the display unit to display the original image frame with the successfully recognized target being marked on the display unit in a foreground processing manner. After the input unit is operated by the user to transmit the input signal to select at least one of the targets through the input unit, the processor transmits the target data of the selected target to the application program as input data of the application program.

The second objective of the present invention is to provide a data input method through capturing image by utilizing a data processing device.

In order to achieve the second objective, the data input method through capturing image for a data processing device comprises the following steps:
(1) obtaining an original image frame including at least one target;
(2) enabling image recognition means for respectively recognizing various types of targets in the original image frame;
(3) recognizing the target in the original image frame to obtain target data carried by the target;
(4) determining whether the target in the original image frame is successfully recognized;
(5) marking the successfully recognized target in the original image frame;
(6) transmitting the target data of the recognized target to an application program which requires the target.

Through the data processing device using an image as a data source and the data input method by capturing image of the present invention, various types of targets in an original image frame are recognized simultaneously. The successfully recognized target in the original image frame are marked in an obvious manner, so that the user only needs to select the marked target in the original image frame to conveniently obtain target data of the various types of targets in the original image frame as input data of an application program. Therefore, only a single operation interface is needed, and the operation is simple.

The detailed features and preferred embodiments of the present invention will be described in detail below with the accompanying drawings. Persons skilled in the art can easily understand and implement the content of the present invention.

### BRIEF DESCRIPTION OF THE DRAWINGS

FIG. 1 is a functional block diagram according to a preferred embodiment of a data processing device of the present invention;
FIG. 2 shows successfully recognized target marked in an original image frame by using the data processing device of the present invention;
FIG. 3 is a flow chart of a data input method through capturing image of the present invention;
FIG. 4 is a modified flow chart of a data input method through capturing image of the present invention;
FIG. 5 is another flow chart of processes of the data processing device including a selection procedure according to the preferred embodiment of the present invention;
FIG. 6 is yet another flow chart of processes of the data processing device including a selection procedure according to the preferred embodiment of the present invention;
FIG. 7 shows a block diagram of processes of a data processing device including a target data previewing procedure according to the preferred embodiment of the present invention; and
FIGs. 8A and 8B show a flow chart of a practical application according to the preferred embodiment of the present invention.

### DETAILED DESCRIPTION

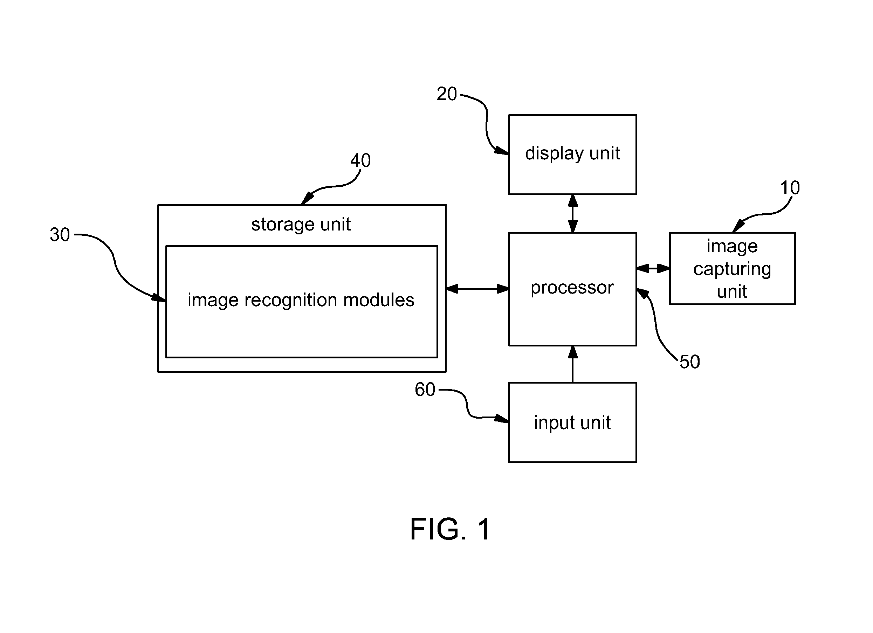

FIG. 1 is a block diagram of a data processing device using an image as a data source for an application program according to a preferred embodiment of the present invention. By utilizing the data processing device, a user can obtain target data of the various types of targets in an original image frame as input data of the application program by selected the marked target in the original image frame.

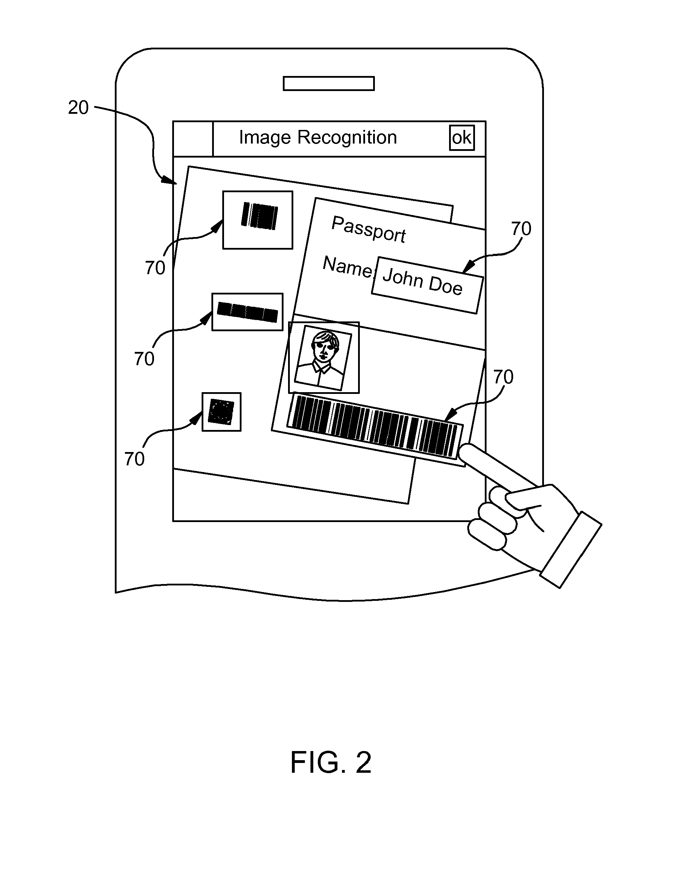

Referring to FIGs. 1 and 2, the data processing device according to the preferred embodiment of the present invention includes an image capturing unit 10, a display unit 20, a plurality of image recognition modules 30, a storage unit 40, a processor 50, and an input unit 60.

As shown in FIG. 1, the image capturing unit 10 is provided for obtaining the original image frame. Usually, the original image frame captured is a digitalized image, which is easier to be analyzed and stored by the data processing device.

The display unit 20 is provided for displaying the original image frame. And the display unit 20 also displays an execution content of the application program if necessary.

The image recognition modules 30 are provided for respectively recognizing different types of targets in the original image frame, so as to obtain target data carried by each target. Generally, each of the image recognition modules 30 may be a custom made chip electrically connected to the processor 50 for recognizing a specific type of targets, or each of the image recognition modules 30 may be an image recognition program executed by the processor 50.

The storage unit 40 is provided for storing the original image frame, the image recognition modules 30, if the image recognition modules 30 are programs executed by the processor 50, the target data obtained from each target in the original image frame, the application program, and related data generated during the operation of the data processing device.

The processor 50 may be a micro processing unit MPU, a micro controlling unit MCU, a central processing unit CPU, or a system-on-chip SoC. The processor 50 executes the application program and enables the image recognition modules 30 to recognize the targets in the original image frame. The processor 50 also loads the recognized target data of the target into the storage unit 40, and marks the successfully recognized targets in the original image frame as marked targets.

The input unit 60 is electrically connected to the processor 50 for being operated by the user. After being operated by the user, the input unit 60 transmits an input signal to the processor 50 to execute the application program and to select one or more successfully recognized targets in the original image frame, wherein the successfully recognized targets are marked as marked target in the original frame. After the user selects at least one marked target in the original image frame through the input unit 60, the processor 50 transmits the target data of the marked target which is selected to the application program as input data of the application program. For example, the processor 50 may simulate an action of keystroke to transmit the target data, thus the target data transmitted is simulated like data input through a keyboard.

Specifically, the data processing device may be a handheld data processing device having image capturing function and program execution function, such as a personal digital assistant PDA, a mobile phone, and laptop computer. The data processing device is not limited to handheld or portable device as described above, the data processing device may be a computer having image capturing function and program execution function, such as a desktop computer. These types of data processing devices have excellent computing capabilities, and are suitable for implementing the functions of the present invention. The storage unit 40 may be specifically implemented by a built-in random access memory module, RAM module, in the data processing device or a removable memory card adopting a NAND flash memory.

The image capturing unit 10 described above may be a small-sized image capturing module or a webcam with one megapixel resolution for capturing a target and storing the target as a digitalized target image. Currently, most of the handheld data processing devices and the computer devices have been equipped with the aforementioned image capturing unit 10, which are suitable for implement the data processing device of the present invention.

The display unit 20 may be a liquid crystal display unit LCD 20 or a touch-control display. In addition to displaying the original image frame and execution content of the application program, the touch-control display may also serve as the input unit 60 of the present invention, and the user can directly select the marked target in the original image frame displayed by the display unit 20 through touching the touch-control display. Definitely, persons of ordinary skill in the art may also select a cathode ray tube CRT display as the display unit 20 of the present invention, and such variations fall in the scope of the invention.

The input unit 60 is electrically connected to the processor 50. The input unit 60 may be a button set, a joystick, a mouse, or a touch-control module of a touch-control display. The user may adopt the input unit 60 to control the data processing device to execute the application program installed therein, and select the marked target in the original image frame, or perform related operations. For example, the user may adopt the input unit 60 to enable the image capturing unit 10 to capture an image. If the display unit 20 is a touch-control display, a more convenient operating mode is provided by the display unit 20 together with the input unit 60.

In the preferred embodiment of the present invention, the image recognition modules 30 are image recognition programs stored in the storage unit 40, and loaded and executed by the processor 50. As described above, the image recognition modules 30 may be custom made chip electrically connected to the processor 50 and enabled by the processor 50.

In the preferred embodiment of the present invention, each of the image recognition programs executed by the processor 50 may be, but not limited to, an optical character recognition OCR program, a machine readable passport program, a car license plate recognition program, a barcode reading program, an optical mark recognition program, or a human face recognition program stored in the storage unit 40. When start to recognize the original image frame, the processor 50 enables these image recognition programs at the same time, so as to serve as optical character recognition OCR module, a machine readable passport module, a car license plate recognition module, a barcode reading module, an optical mark recognition program, or a human face recognition module to recognize one or more targets in the original image frame and obtain target data of each target. The target may be a car license plate, a human face, characters, a graphic, or a barcode, depending on the functions of the image recognition modules 30. After the targets are successfully recognized, the processor 50 marks the successfully recognized target in the original image frame in an obvious manner as a marked target, and loads the target data of the recognized target into the storage unit 40. In the actual implementation, the successfully recognized target in the original image frame may be marked with a marquee 70 enclosing the recognized target, as shown in FIG. 2, by flashing the recognized target, or by highlighting the recognized target.

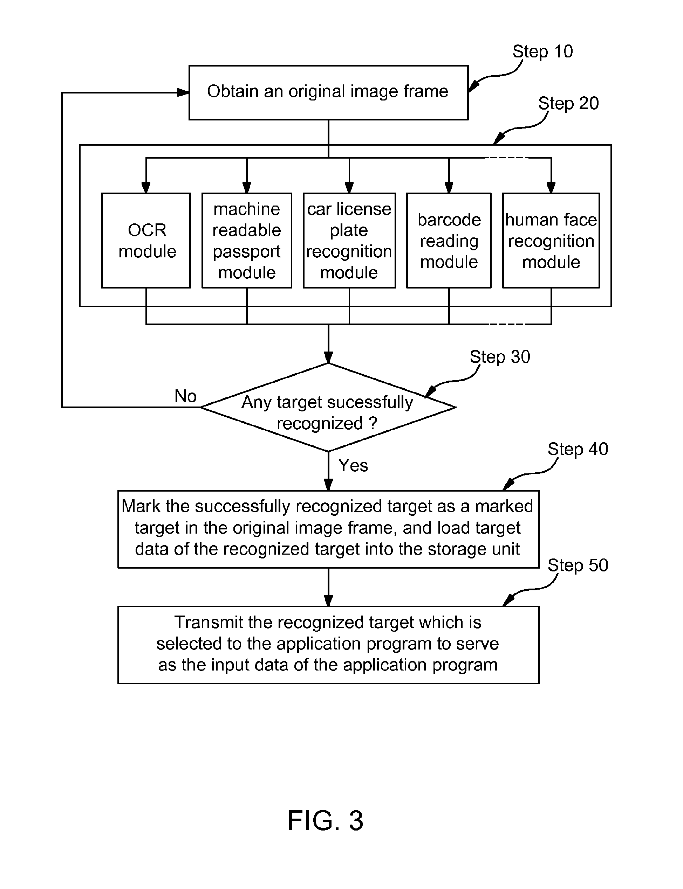

FIG. 3 is a flow chart of a data input method through capturing image of the present invention, which is utilized to the data processing device described above. Basically, before recognizing a target in the original image frame and obtaining target data of the target, the data processing device of the present invention executes an application program. If the application program requires the target data of the target in an original image frame as its input data, the input data may be obtained by the following steps.

In Step 10, the image capturing unit 10 obtains an original image frame including one or more targets, wherein the original image frame may be an image shot by the image capturing unit 10 or an image captured to be previewed on the display unit 20 by the image capturing unit 10.

In Step 20, the processor 50 enables the image recognition modules 30 for respectively recognizing various types of targets in the original image frame. If the image recognition modules 30 are image recognition programs stored in the storage unit 30, the processor 50 has to load the image recognition modules 30 at first and then execute the image recognition modules 30. If the image recognition modules 30 are custom made image recognition chips, the processor 50 has to activate the image recognition modules 30, and then the image recognition modules 30 are ready to receive the original image frame and recognize the targets.

The captured original image frame is transmitted to these image recognition modules 30, and then the image recognition modules 30 start to recognize the targets in the original image frame to obtain target data carried by the target. The functions of the image recognition modules 30 are different; therefore each image recognition module 30 recognizes different targets in the original image frame.

In Step 30, the processor 50 determines whether any target in the original image frame is successfully recognized. If no target is successfully recognized, the process returns to the Step 10 to obtain another original image frame.

In Step 40, if any target is successfully recognized in Step 30, the processor 50 marks the successfully recognized target as a marked target in the original image frame, and loads target data of the recognized target into the storage unit 40.
In Step 50, the recognized targets are marked and displayed on the display unit 20, and the user may select one of the recognized targets by adopting the input unit 60. If any one of the recognized targets is selected by the user, the processor 50 transmits the recognized target which is selected by the user to the application program to serve as the input data of the application program.

Basically in the Step 50, the user operates the input unit 60, and the input unit 60 transmits an input signal to the processor 50 to select one or more recognized targets by. If the input unit 60 and the display unit 20 are integrated as a touch-control display, what the user has to do is simply touch the marked target displayed on the touch-control display, and then the target data of the selected target is transmitted to serve as input data of the application program. Definitely, the user may also cancel the marked target which is selected.

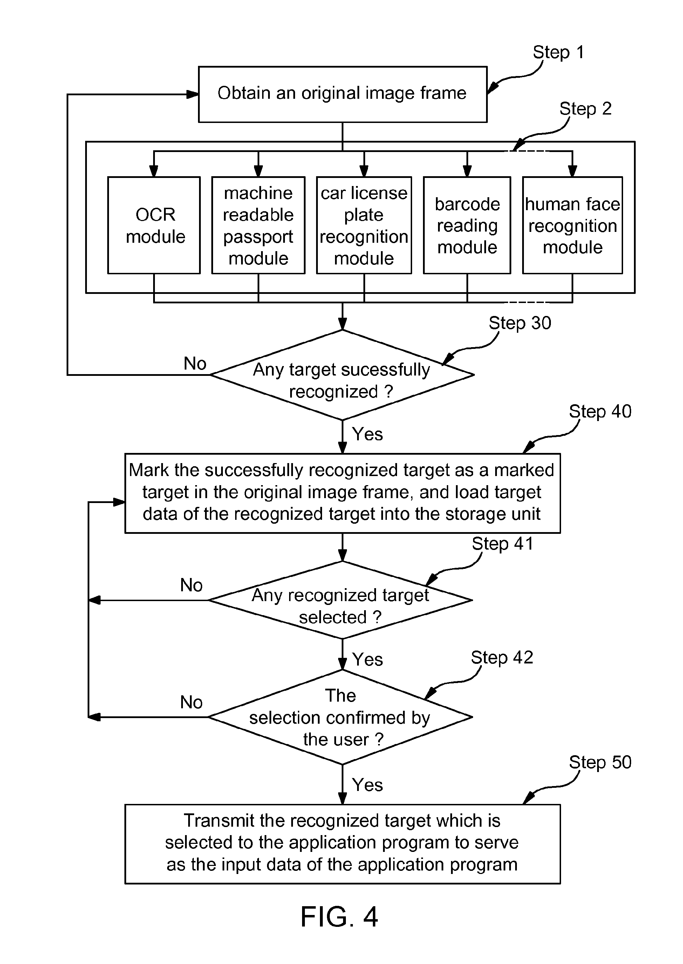

FIG. 4 is a modified flow chart of a data input method through capturing image of the present invention. In the data input method through capturing image of the present invention, the processor 50 further includes a confirmation means, such as executing a confirmation procedure, for display a confirmation prompt on the display unit 20 when the input unit transmit the input signal to select the recognized target. The user can confirm the confirmation prompt by operating the input unit 60 to transmit the input signal. After receiving the input signal as a confirmation prompt from the input unit 60, the processor 50 transmits the target data of the selected recognized target to the application program when at least one of the targets is selected.

As shown in FIG. 4, after Step 40 such as that in FIG. 3, more steps are added as follows.

In Step 41, the processor 50 determines whether any successfully recognized target is selected before transmitting the target data of the recognized target, Step 50. If not, the process returns to Step 40 to display recognized targets on the display unit 20 continuously. If a recognized target, which is marked as a marked target on the display unit 20, is selected, the process goes to Step 42.

In step 42, the processor 50 includes a selection means, such as executing the confirmation procedure, for display the confirmation prompt on the display unit 20, for example, displaying a confirmation dialog box on the display unit 20, and providing two options "YES" and "NO" for the user to select so as to confirm whether to transmit the target data of the marked target which is selected to the application program. The processor 50 determines whether the selection is confirmed by the user transmitting the target data of the recognized target, Step 50. If not confirmed in a predetermined time period, the process returns to Step 40 to display recognized targets on the display unit 20 continuously. If the user performs the confirmation operation by using the input unit 60 or the touch-control display, the process goes to Step 50 and the processor 50 transmits the target data of the recognized target which is selected to the application program.

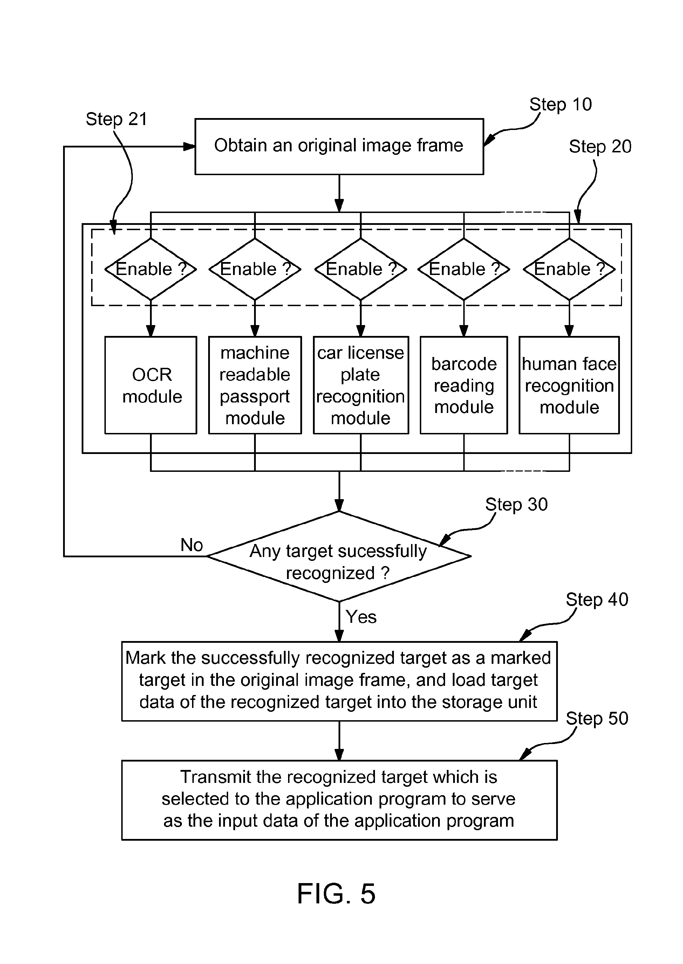

FIG. 5 is another modified flow chart of a data input method through capturing image of the present invention. The processor 50 of the data processing device further includes a selection means, such as executing a selection procedure. The selection procedure is implemented through a program, and mainly used for allowing the user to selectively enable at least one of the image recognition modules 30, so as to make the operation of the user more flexible.

As shown in FIG. 5, the Step 20 such as that in FIG. 3 is modified as follows. After obtaining the original image frame in Step 10, a Step 21 is added into Step 20. In Step 21, the processor 50 executes the selection procedure to display a menu for showing associated options of the image recognition modules 30 graphically or in text manner on the display unit 20 and these associated options of the image recognition modules 30 is shown for being selected to enable at least one of the image recognition modules 30. After the user selectively enables at least one of associated options of the image recognition modules 30, the processor 50 only enables the selected image recognition modules 30, and the enabled image recognition modules 30 respectively recognize the various types of targets in the original image frame. The target may be a barcode, a car license plate, a machine readable passport, or a human face. Only the required image recognition modules 30 are enabled instead of enabling all the image recognition modules 30, the consumption of hardware resources of the data processing device is reduced, thus the efficiency for recognizing the targets is increased.

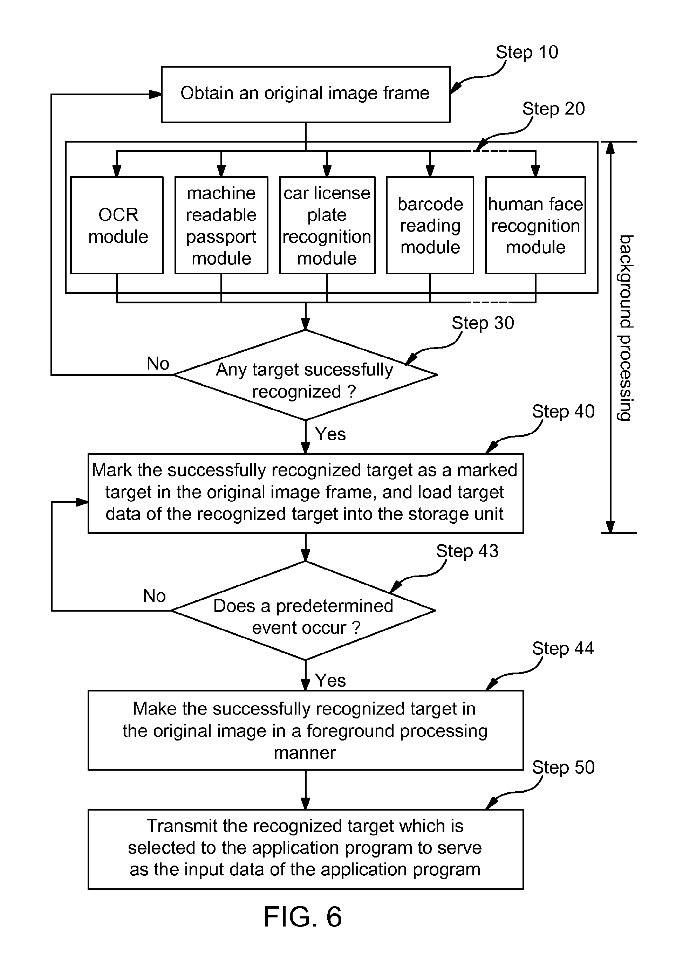

FIG. 6 is yet another modified flow chart of a data input method through capturing image of the present invention. The processor 50 of the data processing device further includes an event detection means, such as executing an event detection procedure implemented through a program, for detecting a predetermined event.

In Step 20 to Step 40 the processor 50 controls the associated content of the image recognition modules 30 and the event detection procedure remain in a background processing manner without being displayed by the display unit 20. That is, the processor 50 hides the original image frame in the background processing manner. In Step 40, the processor 50 marks at least one successfully recognized target as a marked target in the original image frame, and loads recognized target data of the target into the storage unit 40. And in Step 40, the original image frame is hidden in the background processing manner, and it is not displayed on the display unit 20. And then in Step 43, the processor 50 executing the event detection procedure determines whether the predetermined event occurs. If not, the process returns to Step 40 to keep the original image frame being hidden in the background processing manner. If processor 50 executing the event detection procedure detects that the predetermined event occurs, the processor 50 controls the display unit 20 to display the original image frame with the successfully recognized targets on the display unit 20 in a foreground processing manner. The successfully recognized targets are also marked as marked targets. After the user selects at least one of the marked targets through the input unit 60, the process goes to Step 50 and the processor 50 transmits the target data of the recognized target which is selected to the application program as input data of the application program.

The predetermined event includes, for example, triggering a preset shortcut key, selecting a system tray icon, selecting a notification area icon, or selecting a data input instruction of the application program, or selecting a function option of the application program for obtaining the input data, which may all be detected by the processor 50 executing the event detection procedure.

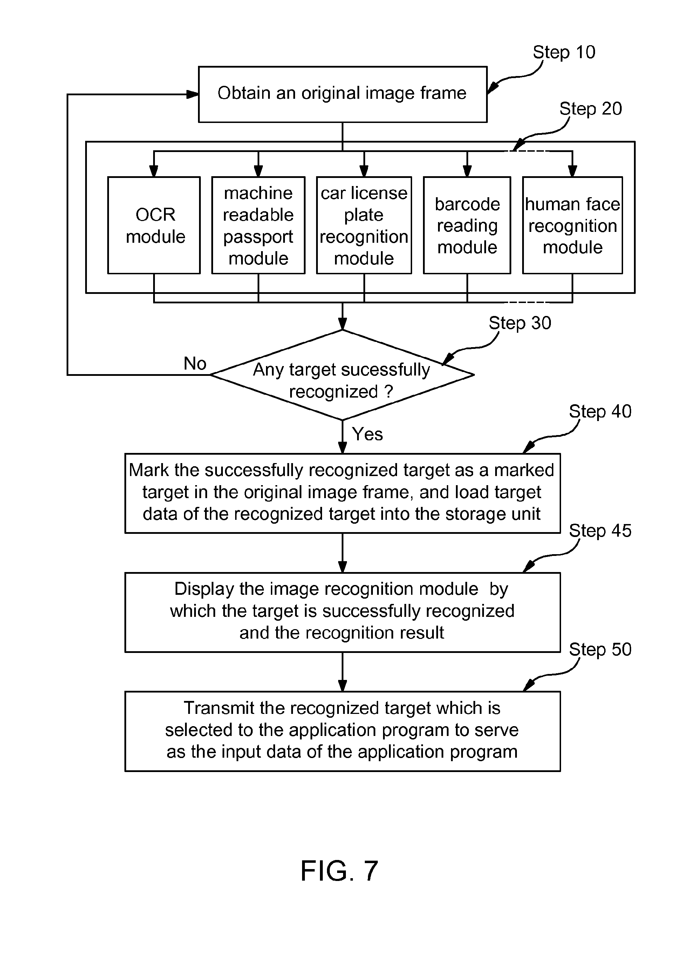

FIG. 7 is another modified flow chart of a data input method through capturing image of the present invention. The processor 50 of the data processing device further includes target data previewing means, such as executing a target data previewing procedure implemented through a program. When the user operates the input unit 60 to transmit the input signal to select a recognized target, which is marked Step 41, not shown in FIG. 7, the process goes to a Step 45 for executing target data previewing procedure.

In Step 45, the processor 50 executes the target data previewing procedure to display the image recognition module 30 by which the target is successfully recognized and the recognition result - the target data of the target - on the display unit 20.

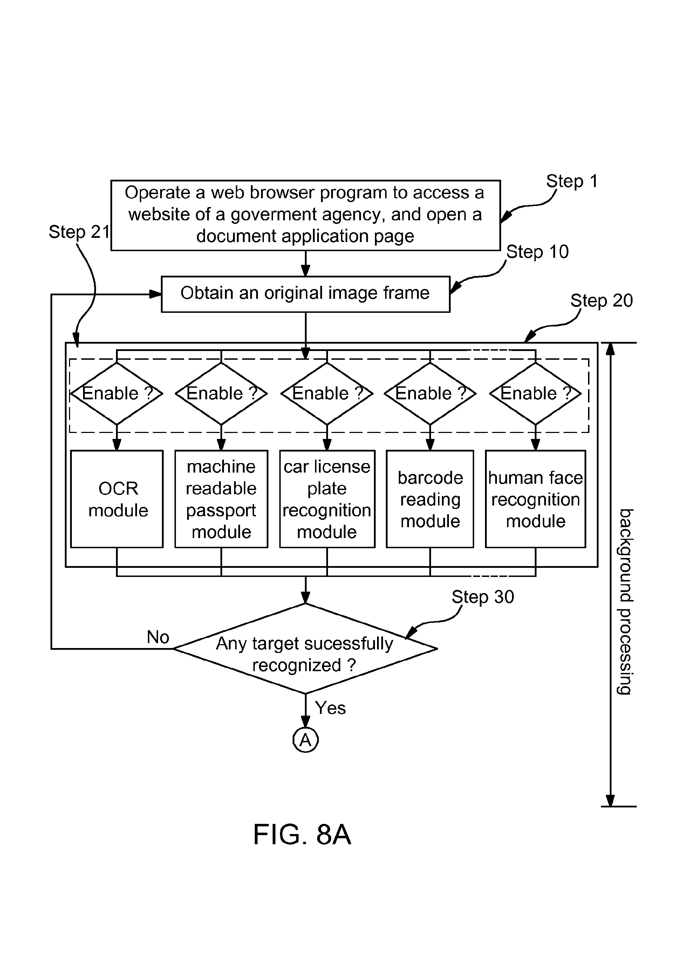

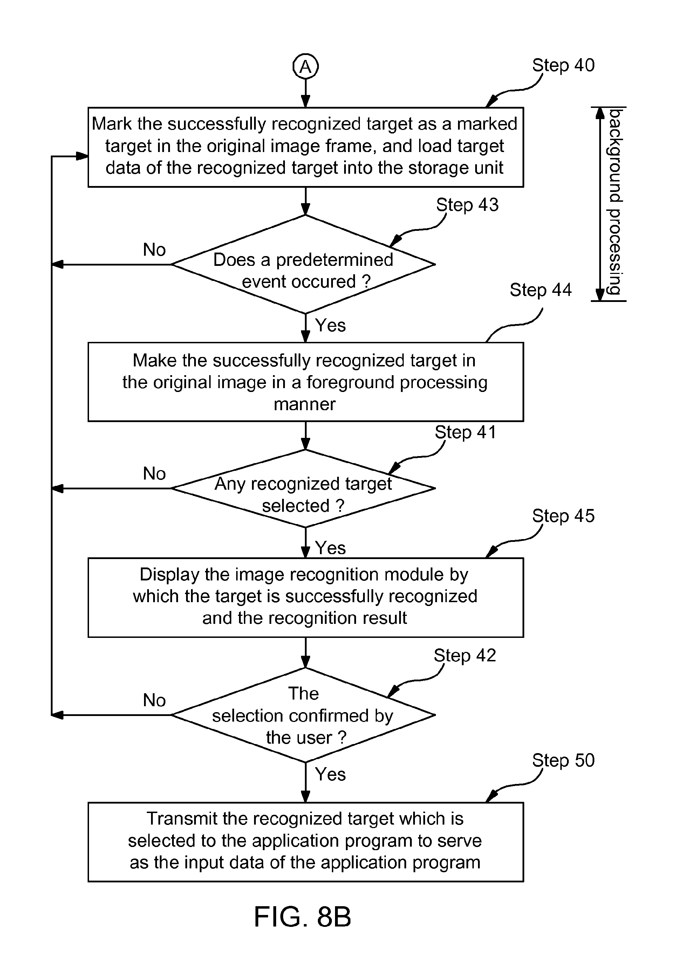

FIGs. 8A and 8B show a flow chart of a practical application according to the preferred embodiment of the present invention, the processing flow of the data processing device of the present invention is illustrated below by taking an application thereof as an example. In the example, a user applies for a certain document to a website of a government agency through a web browser program. The website requires the user to input his/her passport number, and at this time, the user may use the data processing device of the present invention to complete the input of the passport number and related data. The process includes the following steps.

Referring to FIG. 8A, in Step 1, the user operates the web browser program in the data processing device to access the website of the government agency, and opens a document application page.

Referring to FIGs. 2 and 8A, the process then comes to Step 20, the user operates the data processing device and then the data processing device controls the image capturing unit 10 to capture the image of a passport to preview the image of the passport on the display unit 20, and the user can operates the data processing device and then the data processing device controls the image capturing unit 10 to obtain an original image frame of the passport.

Referring to FIGs. 2 and 8A, in Step 21, the processor 50 executes the selection procedure, and displays the image recognition modules 30 on the display unit 20, so that the user selectively enables at least one of the image recognition modules 30. In this example, the user may preferentially selectively enable a machine readable passport module or an OCR module.

Referring to FIG. 8A, in Step 20, the processor 50 then executes the selected image recognition modules 30 and the event detection procedure in a background processing manner, starts recognizing various types of targets in the original image frame respectively, and displays the recently used application program again on the display unit 20. In this example, a frame of the web browser program is displayed on the display unit 20.

In Step 30, the processor 50 determines whether any target in the original image frame is successfully recognized. If no target is successfully recognized, the process returns to the Step 10 to obtain another original image frame.

Referring to FIG. 8B, in Step 40, if any target is successfully recognized, for example, the passport number, name, nationality, contact address, or the other target is successfully recognized, the processor 50 marks the successfully recognized targets in the original image frame as marked targets as marquees 70 shown in FIG. 2, and stores the target data of each recognized target in the storage unit 40. At this time, the processor 50 is still in the background processing mode, and the use of the web browser program by the user may not be affected.

Referring to FIG. 8B, in Step 43, the processor 50 determines whether a predetermined event occurs, the predetermined event in the example is a preset shortcut key being triggered.
In Step 43, if the user moves a cursor or a character input symbol to a passport number field on the application page, and then presses the preset shortcut key, the processor 50 executing the event detection procedure detects the occurrence of the predetermined operation event, the process goes to Step 44.

In Step 44, the processor 50 displays the original image frame with the successfully recognized targets again on the display unit 20 in a foreground processing manner, as shown in FIG. 2. After Step 44, the process goes to Step 41, the processor 50 determines whether any successfully recognized target is selected. If not, the process returns to Step 40 to display recognized targets on the display unit 20 continuously. If a recognized target, which is marked as a marked target on the display unit 20, is selected, the process goes to Step 45.

In Step 45, the processor 50 executing the target data previewing procedure to display the image recognition module 30 by which the target is successfully recognized and the recognition result - the target data of the target - on the display unit 20. And then the process goes to Step 42.

In Step 42, finally, the processor 50 executes the confirmation procedure to display a confirmation prompt on the display unit 20, the processor 50 determines whether the selection is confirmed by the user by using the input unit 60 or the touch-control display. If not confirmed in a predetermined time period, the process returns to Step 40 to display recognized targets on the display unit 20 continuously. If the user performs the confirmation operation by using the input unit 60 or the touch-control display, the process goes to Step 50 and the processor 50 transmits the target data of the recognized target, the passport number, to the passport number field in the web browser program, thereby completing the input of the passport number.

If the user is required to continue inputting data, like name, nationality, and contact address, in other data input fields in the web browser program, what the user has to do is to repeat the process from the Step 44 to the Step 50 so as to complete the data input. Similarly, the process needs to start over again to obtain required data in another passport. Therefore, in an embodiment of the present invention, a re-recognition procedure is executed by the processor 50, which is also implemented through a program. A key or shortcut key used for implementing the re-recognition procedure is set in the data processing device, and the user only needs to implement the re-recognition procedure to perform Step 10 and the subsequent steps in FIGs. 8A and 8B.

While the present invention has been described by the way of example and in terms of the preferred embodiments, it is to be understood that the invention need not to be limited to the disclosed embodiments. On the contrary, it is intended to cover various modifications and similar arrangements included within the spirit and scope of the appended claims, the scope of which should be accorded the broadest interpretation so as to encompass all such modifications and similar structures.

## Claims

1. A data processing device using an original image frame as data source for an application program, wherein the original frame includes at least one target carrying target data to be transmitted to the application program, the data processing device comprising:
an image capturing unit, for obtaining the original image frame;
a display unit, for displaying the original image frame and an execution content of the application program;
image recognition means for respectively recognizing different types of targets in the original image frame to obtain the target data carried by the target;
a storage unit, for storing the original image frame and the target data, and the application program;
a processor, for executing the application program and enabling the image recognition means to recognize the target in the original image frame, loading the recognized target data of the target into the storage unit, and marking a successfully recognized target in the original image frame; and
an input unit, electrically connected to the processor, for transmitting an input signal to the processor to execute the application program and to select the recognized target in the original image frame, so that the processor transmits the target data of the recognized target to the application program as input data of the application program.

2. The data processing device set forth in claim 1, wherein the image recognition means is selected from a group consisting of an optical character recognition program executed by the processor, a machine readable passport program executed by the processor, a car license plate recognition program executed by the processor, a barcode reading program executed by the processor, an optical mark recognition program executed by the processor, a human face recognition program executed by the processor, and a custom made chip electrically connected to the processor.

3. The data processing device set forth in claim 1, wherein the processor marks the successfully recognized target in the original image frame with a marquee enclosing the recognized target, by flashing the recognized target, or by highlighting the recognized target.

4. The data processing device set forth in claim 1, wherein the processor includes confirmation means for display a confirmation prompt on the display unit when the input unit transmits the input signal to select the recognized target, and transmitting the target data of the selected recognized target to the application program after receiving a confirmation prompt from the input unit.

5. The data processing device set forth in claim 1, wherein the processor includes a selection means for displaying a menu for showing associated options of the image recognition means on the display unit, wherein the associated options are for being selected to have the processor to enable the image recognition means to recognize at least one type of targets.

6. The data processing device set forth in claim 1, wherein the processor includes an event detection means for detecting a predetermined event, and the associated content of the image recognition means and the event detection means remain in a background processing manner without being displayed by the display unit.

7. The data processing device set forth in claim 6, wherein the processor controls the display unit to display the original image frame with the successfully recognized target being marked in a foreground processing manner after the event detection means detects that the predetermined event occurs, and transmits the target data of the selected target to the application program as input data of the application program after the input unit transmits the input signal to select at least one of the targets.

8. The data processing device set forth in claim 6, wherein the predetermined event is triggering a preset shortcut key, selecting a system tray icon, selecting a notification area icon, selecting a data input instruction of the application program, or selecting a function option of the application program for obtaining the input data.

9. The data processing device set forth in claim 1, wherein the processor includes a target data previewing means to display the associated content of the image recognition module by which the recognized target is successfully recognized and the target data of the target on the display unit, when the input unit transmits the input signal to selecting one of the recognized targets.

10. A data input method through capturing image for a data processing device, comprising the following steps:
obtaining an original image frame including at least one target;
enabling image recognition means for respectively recognizing various types of targets in the original image frame;
recognizing the target in the original image frame by the image recognition means to obtain target data carried by the target;
determining whether the target in the original image frame is successfully recognized;
marking the successfully recognized target in the original image frame; and
transmitting the target data of the recognized target to an application program.

11. The data input method set forth in claim 10, further comprising a step for determining whether any successfully recognized target is selected before transmitting the target data of the recognized target, and then transmitting the target data of the recognized target which is selected.

12. The data input method set forth in claim 11, further comprising a step for determining whether the selection of the recognized target is confirmed before transmitting the target data of the recognized target, and then transmitting the target data of the recognized target.

13. The data input method set forth in claim 12, wherein the step for determining whether the selection of the recognized target is confirmed further comprising:
displaying the confirmation prompt on a display unit.

14. The data input method set forth in claim 10, further comprising a step for hiding the original image frame in a background processing manner, and displaying the original image frame with the successfully recognized target in a foreground processing manner when a predetermined event occurs.

15. The data input method set forth in claim 10, further comprising a step for displaying the image recognition module by which the target is successfully recognized and the target data of the target before transmitting the target data of the recognized target.
